(19) Europäisches Patentamt
European Patent Office
Office européen des brevets

(11) **EP 3 951 200 B1**

(12) **EUROPEAN PATENT SPECIFICATION**

(45) Date of publication and mention
of the grant of the patent:
**14.08.2024  Bulletin 2024/33**

(21) Application number: **20777562.8**

(22) Date of filing: **02.03.2020**

(51) International Patent Classification (IPC):
*F16C 37/00* (2006.01)      *F16C 19/52* (2006.01)
*F16C 19/54* (2006.01)      *B23Q 11/12* (2006.01)
*F16C 41/00* (2006.01)

(52) Cooperative Patent Classification (CPC):
**F16C 19/525; B23Q 11/123; F16C 19/543;**
**F16C 37/007;** F16C 41/007; F16C 2233/00;
F16C 2322/39

(86) International application number:
**PCT/JP2020/008594**

(87) International publication number:
**WO 2020/195563 (01.10.2020 Gazette 2020/40)**

(54) **BEARING APPARATUS**

LAGERVORRICHTUNG

DISPOSITIF DE PALIER

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **25.03.2019   JP 2019057035**

(43) Date of publication of application:
**09.02.2022   Bulletin 2022/06**

(73) Proprietor: **NTN Corporation**
**Osaka-shi, Osaka 550-0003 (JP)**

(72) Inventors:
• **HASHIZUME, Shohei**
**Kuwana-shi, Mie 511-8678 (JP)**

• **NASU, Keisuke**
**Kuwana-shi, Mie 511-8678 (JP)**

(74) Representative: **Bockhorni & Brüntjen**
**Partnerschaft**
**Patentanwälte mbB**
**Agnes-Bernauer-Straße 88**
**80687 München (DE)**

(56) References cited:
**JP-A- 2017 090 318      JP-A- 2017 187 450**
**JP-A- 2017 187 451      JP-A- 2018 076 923**
**JP-A- 2018 076 923      US-A1- 2017 291 204**

# Description

TECHNICAL FIELD

This invention relates to a bearing apparatus that rotatably supports a main spindle or the like of a machine tool.

BACKGROUND ART

A bearing for a main spindle of a machine tool is often used at a high speed and under low load, and an angular contact ball bearing is widely employed for such a bearing. The bearing for the main spindle of the machine tool is lubricated by air-oil (oil-mist) lubrication or grease lubrication. Air-oil lubrication is characterized in ability to maintain a stable lubricated state for a long period of time because of external supply of lubricating oil. Grease lubrication is characterized in excellent cost efficiency because of requirement of neither of an annexed facility and a pipe and in environmental friendliness because of an extremely small amount of generation of mist.

A bearing used in a higher-speed region such as a region where a dn value calculated by multiplying an inner diameter of an inner ring by the number of rotations is equal to or larger than one million as in a main spindle of a machining center among machine tools should operate in a more stable manner. For various factors described below, however, the bearing may undergo surface roughening or peeling at a bearing raceway surface or abnormality of a retainer, and thereafter a temperature of the bearing may excessively increase.

- Inappropriate feed and drain of lubricating oil in air-oil lubrication (excessively small or large amount of oil or insufficient exhaust)
- Deterioration of lubricating grease sealed in bearing
- Entry of coolant or water or a foreign matter into a bearing rolling portion
- Oil film rupture due to excessive preload, that is, increase in contact pressure in rolling portion

In order to prevent excessive temperature increase in the bearing due to the above factors, Japanese Patent Laying-Open No. 2017-26078 (PTL 1) discloses such a technique that a lubrication oil feed pump and a contactless temperature sensor are contained in a spacer adjacent to a bearing and the lubrication oil feed pump feeds lubricating oil to the inside of the bearing in accordance with a temperature value of a bearing lubricated portion measured by the temperature sensor.

CITATION LIST

PATENT LITERATURE

PTL 1: Japanese Patent Laying-Open No. 2017-26078.

JP 2018 076923 A discloses the features of the preamble of claim 1.

SUMMARY OF INVENTION

TECHNICAL PROBLEM

In general, in air-oil lubrication, oil mist is generated by intermittently adding oil from an oil valve to constantly supplied compressed air.

When an amount of added oil is insufficient, friction force increases in a bearing, which results in friction heat and temperature increase and in seizure. When an amount of added oil is excessively large, on the other hand, agitation resistance of oil in a bearing portion increases, which results in temperature increase and seizure. Since a range of an appropriate amount of oil is relatively narrow for a bearing that supports a shaft that rotates at a high speed, it is difficult to add an appropriate amount of oil in air-oil lubrication.

Though a manufacturer indicates a recommended condition for an amount of added oil, an appropriate amount of oil also varies depending on an operating condition of a machine tool or the like. For example, when an operating condition such as a rotation speed, a duration of continuous operation, load at the time of working of a workpiece, or a position of a shaft during working varies, addition by a uniform amount is unable to address such variation.

The amount of addition in an oil valve (a mixing valve) may be regulated while a temperature of the bearing is monitored. The oil valve, however, is often arranged at a location relatively distant from the bearing because oil is supplied to the bearing as being finely cut into fine particles after it is dripped, and there is a time lag from dripping of oil from the oil valve until spread of oil over the bearing. Therefore, addition of air-oil after detection of the temperature of the bearing exceeding a threshold value is too late for lubrication, and abnormal heat generation or excessive temperature increase occurs in the bearing.

The present invention was made to solve the problems above, and an object thereof is to provide a bearing apparatus that can be cooled at appropriate timing.

SOLUTION TO PROBLEM

(1) A bearing apparatus according to the present disclosure includes a bearing including an inner ring and an outer ring, a spacer including an inner-ring spacer adjacent to the inner ring and an outer-ring spacer adjacent to the outer ring, at least one nozzle provided in the outer-ring spacer, the at least one nozzle emitting cooling air supplied from an air supply apparatus toward the inner-ring spacer, and a heat flux sensor provided in the bearing or the spacer. An output signal from the heat flux sensor is used for regulation of a flow rate of air emitted from the at least one nozzle.

(2) In one form, the at least one nozzle includes a first nozzle and a second nozzle arranged at a prescribed interval in a circumferential direction of an inside surface of the outer-ring spacer. The heat flux sensor is arranged at any position between a position intermediate between the first nozzle and the second nozzle and a position of the second nozzle in the circumferential direction of the inside surface of the outer-ring spacer.

(3) In one form, the first nozzle and the second nozzle are provided as being inclined forward in a direction of rotation of the inner ring. The second nozzle is arranged at a position on a forward side in the direction of rotation of the inner ring relative to the first nozzle.

(4) In one form, the at least one nozzle is arranged in a central portion of the outer-ring spacer in an axial direction. The heat flux sensor is arranged at an end of the outer-ring spacer in the axial direction.

(5) In one form, the flow rate of air emitted from the at least one nozzle is increased when at least one of magnitude of a heat flux and a rate of change in heat flux detected by the heat flux sensor exceeds a corresponding judgment criterion value.

(6) In one form, the air supply apparatus includes a compressor that generates compressed air and a valve provided between the compressor and the at least one nozzle. An output from the heat flux sensor is used for controlling at least one of output from the compressor and opening of the valve.

(7) In one form, the heat flux sensor is connected to a controller. The controller determines whether or not there is abnormality of the bearing or a sign of abnormality based on an output from the heat flux sensor, and when there is abnormality or a sign of abnormality, the controller performs processing for increasing the flow rate of air emitted from the at least one nozzle.

(8) In one form, the bearing apparatus further includes a load sensor connected to a controller, the load sensor detecting preload applied to the bearing and external load. The controller performs processing for regulating the flow rate of air emitted from the at least one nozzle based on an output from the load sensor.

(9) In one form, the bearing apparatus rotatably supports a main spindle of a machine tool.

ADVANTAGEOUS EFFECTS OF INVENTION

According to this construction, whether or not a temperature of a bearing has varied can be determined with the use of a heat flux sensor. Therefore, abnormality of the bearing can be detected early. An output signal from the heat flux sensor is used for regulation of a flow rate of air (cooling air) emitted from a nozzle provided in an outer-ring spacer. Therefore, the bearing apparatus can be cooled at appropriate timing with air emitted from the nozzle.

BRIEF DESCRIPTION OF DRAWINGS

Fig. 1 is a cross-sectional view showing a schematic construction of a spindle apparatus.
Fig. 2 is a schematic cross-sectional view showing a construction of a bearing apparatus.
Fig. 3 is a diagram schematically showing a cross-section of a spacer along III-III in Fig. 2.
Fig. 4 is a block diagram showing an exemplary construction of an air supply apparatus.
Fig. 5 is a diagram showing relation among a heat flux, a temperature, and a rotation speed obtained in an acceleration and slowdown test.
Fig. 6 is an enlarged view of the abscissa in a section from t1 to t2 in Fig. 5.
Fig. 7 is a diagram showing relation among a heat flux, a temperature, and a rotation speed in a bearing abnormality simulation test.
Fig. 8 is a waveform diagram for illustrating an operation by the bearing apparatus.
Fig. 9 is a flowchart for illustrating control of supply of cooling air by a controller.
Fig. 10 is a diagram showing a modification of arrangement of a heat flux sensor.
Fig. 11 is a diagram (No. 1) showing another modification of arrangement of the heat flux sensor.
Fig. 12 is a diagram (No. 2) showing another modification of arrangement of the heat flux sensor.

DESCRIPTION OF EMBODIMENTS

An embodiment of the present invention will be described below with reference to the drawings. The same or corresponding elements in the drawings below have the same reference characters allotted and description thereof will not be repeated.

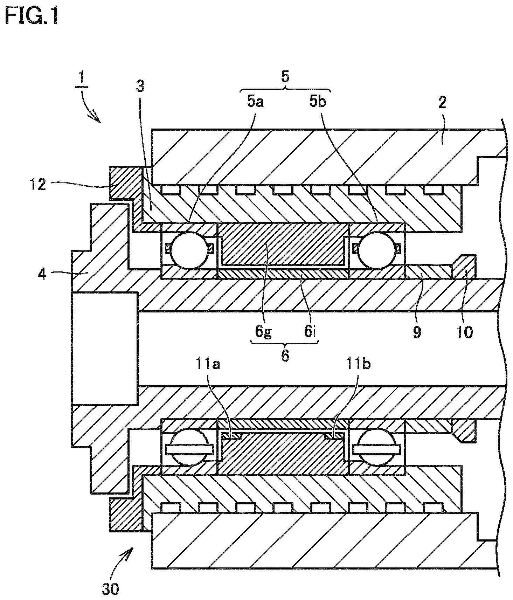

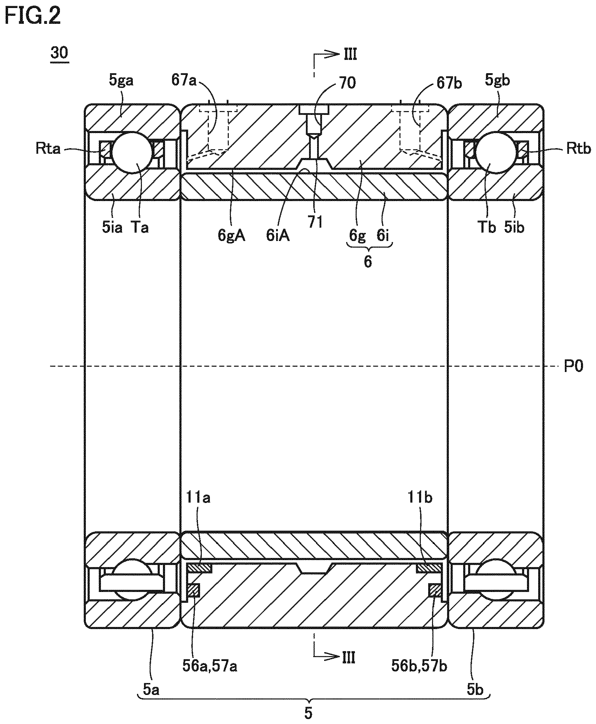

Fig. 1 is a cross-sectional view showing a schematic construction of a spindle apparatus 1 in which a bearing apparatus 30 according to the present embodiment is incorporated. Fig. 2 is a schematic cross-sectional view showing a construction of bearing apparatus 30 according to the present embodiment.

Spindle apparatus 1 shown in Fig. 1 is used, for example, as a built-in motor type spindle apparatus of a machine tool. In this case, a not-shown motor is incorporated on one end side of a main spindle 4 supported by spindle apparatus 1 for a main spindle of a machine tool, and a not-shown cutting tool such as an end mill is connected to the other end.

Spindle apparatus 1 includes bearings 5a and 5b, a spacer 6 arranged adjacently to bearings 5a and 5b, and heat flux sensors 11a and 11b. Main spindle 4 is rotatably supported by a plurality of bearings 5a and 5b provided in a housing 3 embedded in an inside portion of a bearing jacket 2. Bearing 5a includes an inner ring 5ia, an outer ring 5ga, a rolling element Ta, and a retainer Rta. Bearing 5b includes an inner ring 5ib, an outer ring 5gb, a rolling element Tb, and a retainer Rtb. Spacer 6 includes an inner-ring spacer 6i and an outer-ring spacer 6g.

Inner ring 5ia of bearing 5a and inner ring 5ib of bearing 5b that are distant in an axial direction are fitted to main spindle 4 by interference fit (press-fitting). Inner-ring spacer 6i is arranged between inner rings 5ia and Sib and outer-ring spacer 6g is arranged between outer rings 5ga and 5gb.

Bearing 5a is a rolling bearing in which a plurality of rolling elements Ta are arranged between inner ring 5ia and outer ring 5ga. Intervals between rolling elements Ta are held by retainer Rta. Bearing 5b is a rolling bearing in which a plurality of rolling elements Tb are arranged between inner ring 5ib and outer ring 5gb. Intervals between rolling elements Tb are held by retainer Rtb.

An angular contact ball bearing, a deep groove ball bearing, or a tapered roller bearing can be employed as bearings 5a and 5b. The angular contact ball bearing is included in bearing apparatus 30 shown in Fig. 2, where two bearings 5a and 5b are provided in back-to-back duplex bearing (DB) arrangement. Arrangement of the bearing is not limited to back-to-back duplex bearing arrangement, and for example, face-to-face duplex bearing arrangement may be applicable.

Though a structure in which two bearings 5a and 5b support main spindle 4 is illustrated and described, a structure in which two or more bearings support main spindle 4 may be applicable.

A cooling medium flow channel is provided in housing 3. By feeding a cooling medium between housing 3 and bearing jacket 2, bearings 5a and 5b can be cooled.

In spindle apparatus 1 according to the present embodiment, lubricating oil supply paths 67a and 67b for injecting lubricating oil to bearings 5a and 5b for cooling and lubrication of bearings 5a and 5b are provided in outer-ring spacer 6g. Lubricating oil is injected in a state of air-oil or oil mist together with air that carries lubricating oil from emission holes provided at tip ends of lubricating oil supply paths 67a and 67b. Fig. 1 does not show lubricating oil supply paths 67a and 67b for the sake of brevity.

Heat flux sensors 11a and 11b that measure a heat flux are fixed to an inside surface 6gA of outer-ring spacer 6g and are opposed to an outside surface 6iA of inner-ring spacer 6i. The heat flux refers to a quantity of heat that passes through a unit area per unit time.

Each of heat flux sensors 11a and 11b is a sensor that converts a heat flux into an electrical signal based on a Seebeck effect, and an output voltage is generated from a slight temperature difference between a front side and a rear side of the sensor. Heat flux sensors 11a and 11b are each more sensitive to variation in heat in the inside of the bearing than a temperature sensor such as a contactless temperature sensor or a thermocouple, and they timely follow variation in heat in the inside of the bearing.

Heat flux sensor 11a is arranged in inside surface 6gA of outer-ring spacer 6g, at an end on a side of bearing 5a in an axial direction (a direction along a rotation axis P0). Heat flux sensor 11b is arranged in inside surface 6gA of outer-ring spacer 6g, at an end on a side of bearing 5b in the axial direction. Since heat flux sensors 11a and 11b are thus provided in the vicinity of respective bearings 5a and 5b in outer-ring spacer 6g, heat flux sensors 11a and 11b can directly detect a heat flux of heat that flows between the inner ring and the outer ring of bearings 5a and 5b.

Heat flux sensors 11a and 11b can also be provided in inside surface 6gA of outer-ring spacer 6g, around a central portion in the axial direction. According to such arrangement as well, a heat flux of heat that flows between the inner ring and the outer ring of bearings 5a and 5b can indirectly be detected.

In an attempt to measure a temperature of inner rings 5ia and Sib, outer rings 5ga and 5gb, and spacer 6 for detecting a sign of seizure of bearings 5a and 5b, in spite of abrupt heat generation, the sign may not be detected in an early stage because of delay in increase in temperature.

In contrast, in the present embodiment, the sign of seizure of bearings 5a and 5b is detected based on outputs from heat flux sensors 11a and 11b. By using the outputs from heat flux sensors 11a and 11b, abrupt heat generation can quickly be detected because heat flux starts to change earlier than the temperature.

A temperature sensor 56a and a vibration sensor 57a are arranged on an end surface on the side of bearing 5a in the axial direction of outer-ring spacer 6g. A temperature sensor 56b and a vibration sensor 57b are arranged on an end surface on the side of bearing 5b in the axial direction of outer-ring spacer 6g.

In spindle apparatus 1 according to the present embodiment, a nozzle 70 for emitting compressed cooling air toward outside surface 6iA of inner-ring spacer 6i is provided in outer-ring spacer 6g. Nozzle 70 is provided in inside surface 6gA of outer-ring spacer 6g, in a central portion in the axial direction.

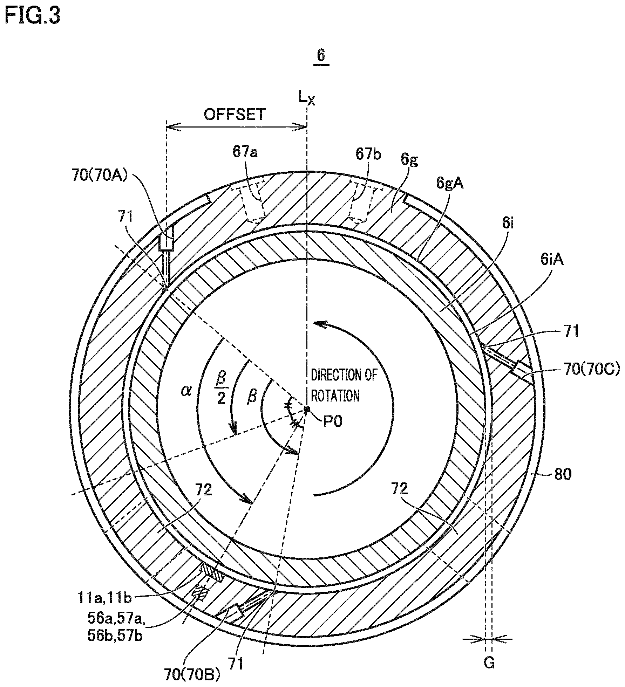

Fig. 3 is a diagram schematically showing a cross-section of spacer 6 along III-III in Fig. 2. In Fig. 3, a direction of rotation of inner-ring spacer 6i is counterclockwise. The direction of rotation of inner-ring spacer 6i is simply also referred to as a "direction of rotation" below.

As described above, spacer 6 includes inner-ring spacer 6i and outer-ring spacer 6g. Outer-ring spacer 6g is provided with lubricating oil supply paths 67a and 67b for air-oil lubrication in its upper portion and with an exhaust groove 72 in its lower portion.

In outer-ring spacer 6g, three nozzles 70 for emitting cooling air toward outside surface 6iA of inner-ring spacer 6i are arranged in inside surface 6gA of outer-ring spacer 6g at regular intervals (120° interval) at a prescribed distance from one another. The number of nozzles 70 is not limited to three, and it may be set to at least four or at most two.

An emission port 71 of each nozzle 70 is provided in inside surface 6gA of outer-ring spacer 6g. Cooling air is emitted from emission port 71 of each nozzle 70 toward outside surface 6iA of inner-ring spacer 6i. Cooling air absorbs heat as it passes through a gap G between inside surface 6gA of outer-ring spacer 6g and outside surface 6iA of inner-ring spacer 6i, and thereafter it is emitted to the outside through exhaust groove 72.

Nozzle 70 closest to lubricating oil supply paths 67a and 67b in Fig. 3 is also referred to as a "first nozzle 70A" below, nozzle 70 arranged next to first nozzle 70 on a counterclockwise side (a forward side in the direction of rotation) is also referred to as a "second nozzle 70B" below, and nozzle 70 arranged next to second nozzle 70 on the counterclockwise side is also referred to as a "third nozzle 70C" below.

First nozzle 70A is formed at a position offset on the counterclockwise side (the forward side in the direction of rotation) from a straight line Lx extending radially upward from rotation axis P0, so as to extend in parallel to straight line Lx. A direction of emission of air from first nozzle 70A is thus not perpendicular to the direction of rotation but inclined forward in the direction of rotation. With nozzle 70 being offset as such, cooling air stays for a long time around the surface of inner-ring spacer 6i as a swirl that flows in the direction of rotation without being diffused, so that a time period of absorption of heat of inner-ring spacer 6i by cooling air is long. Therefore, an effect of cooling of inner-ring spacer 6i is improved. Second nozzle 70B and third nozzle 70C are also offset similarly to first nozzle 70A.

An introduction groove 80 in an arc shape for introducing cooling air into each nozzle 70 is provided in the outside surface of outer-ring spacer 6g. Introduction groove 80 is provided to communicate with each nozzle 70. A path for introduction of cooling air into introduction groove 80 is provided independently of a path for introduction of air-oil into lubricating oil supply paths 67a and 67b.

Since heat flux sensors 11a and 11b detect also a flow of a small quantity of heat, outputs from heat flux sensors 11a and 11b are greatly affected by cooling air.

In view of this aspect, heat flux sensors 11a and 11b are provided at positions less likely to be affected by cooling air. Specifically, heat flux sensors 11a and 11b are arranged between a position intermediate between first nozzle 70A and second nozzle 70B in a circumferential direction of inside surface 6gA of outer-ring spacer 6g and the position of second nozzle 70B. In other words, as shown in Fig. 3, with arrangement of first nozzle 70A in the circumferential direction being defined as the reference, an angle of arrangement α of heat flux sensors 11a and 11b in the circumferential direction is set within a range larger than an angle β/2 (= 60°) corresponding to the position intermediate between first nozzle 70A and second nozzle 70B and smaller than an angle of arrangement β (= 120°) of second nozzle 70B in the circumferential direction. With such arrangement, outputs from heat flux sensors 11a and 11b are less likely to be affected by a swirl of cooling air emitted from first nozzle 70A and less likely to be affected by a backflow (pressure flow) of cooling air emitted from second nozzle 70B. Heat flux sensors 11a and 11b can thus more accurately detect a heat flux generated between outer-ring spacer 6g and inner-ring spacer 6i.

Lubricating oil supply paths 67a and 67b are arranged in the upper portion of outer-ring spacer 6g, whereas heat flux sensors 11a and 11b are arranged in the lower portion of outer-ring spacer 6g. Therefore, outputs from heat flux sensors 11a and 11b are less likely to be affected by air-oil injected from lubricating oil supply paths 67a and 67b. Consequently, heat flux sensors 11a and 11b can more accurately detect a heat flux generated between outer-ring spacer 6g and inner-ring spacer 6i.

Positions of nozzle 70, lubricating oil supply paths 67a and 67b, and heat flux sensors 11a and 11b in Fig. 2 described above schematically represent positional relation in a direction of the rotation axis and a distance from rotation axis P0. Actual arrangement of nozzle 70, lubricating oil supply paths 67a and 67b, and heat flux sensors 11a and 11b in inside surface 6gA of outer-ring spacer 6g in the circumferential direction is as shown in Fig. 3.

A line (not shown) for sending a detection signal from heat flux sensor 11a to a controller 55 which will be described later is connected to heat flux sensor 11a. A line (not shown) for sending a detection signal from heat flux sensor 11b to controller 55 which will be described later is connected to heat flux sensor 11b.

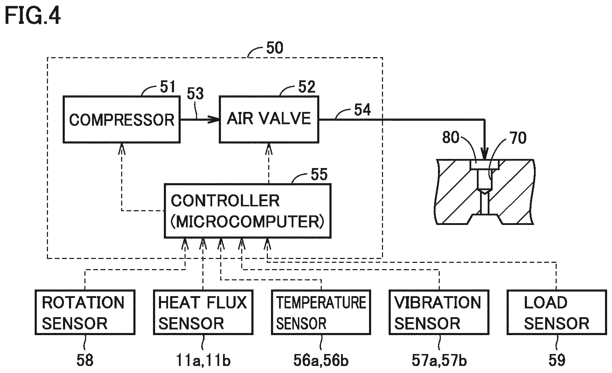

Fig. 4 is a block diagram showing an exemplary construction of air supply apparatus 50 for supplying cooling air to introduction groove 80 and nozzle 70. Air supply apparatus 50 includes a compressor 51, an air valve 52, pipes 53 and 54, and controller (microcomputer) 55.

Compressor 51 is activated by a control signal from controller 55 and compresses air. Air valve 52 communicates with compressor 51 through pipe 53 and communicates with introduction groove 80 and each nozzle 70 through pipe 54. Opening of air valve 52 is controlled by a control signal from controller 55.

Controller 55 determines whether or not there is a sign of abnormality (such as seizure) of bearings 5a and 5b based on outputs from heat flux sensors 11a and 11b. When controller 55 determines that there is a sign of abnormality, it controls at least one of output from compressor 51 and opening of air valve 52 to increase a flow rate of cooling air emitted from each nozzle 70. Controller 55 may be configured to further receive outputs from temperature sensor 56, vibration sensor 57, rotation sensor 58, and load sensor 59 to regulate a flow rate of cooling air in consideration also of these outputs.

Load sensor 59 is provided, for example, in a gap between the bearing and the spacer so as to sense preload applied to bearing 5 and external load. For example, in a machine tool, preload applied to bearing 5 also varies due to variation in force externally applied by a workpiece or heat generation due to high-speed operation or centrifugal force. With increase in preload, a quantity of heat generation may increase due to friction force caused by oil film rupture. Therefore, it is also effective to increase the flow rate of cooling air when load sensor 59 detects increase in preload. It is also effective to increase the flow rate of cooling air when external load is directly detected.

<Acceleration and Slowdown Test>

The present applicant conducted an acceleration and slowdown test, in which the bearing apparatus according to the embodiment was incorporated in a tester simulating a main spindle of a machine tool and relation among a heat flux, a temperature, and a rotation speed at the time when the rotation speed of main spindle 4 was increased and decreased was evaluated.

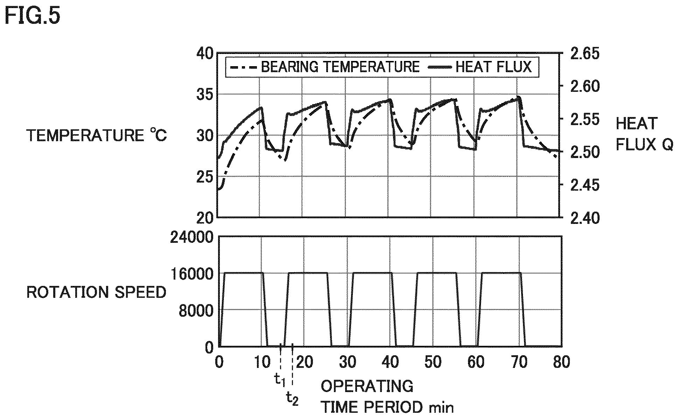

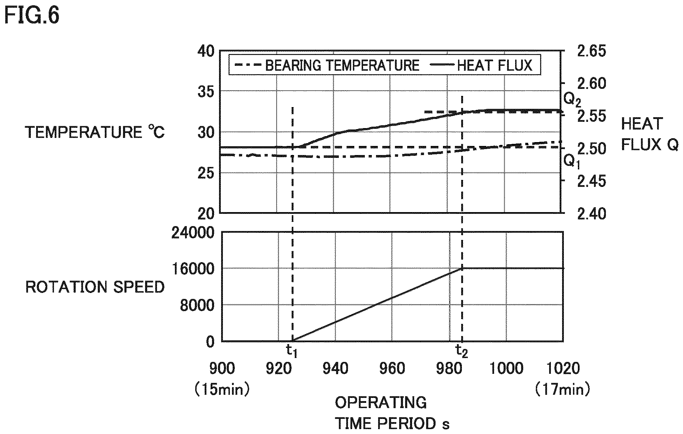

Fig. 5 is a diagram showing relation among a heat flux, a temperature, and a rotation speed obtained in the acceleration and slowdown test. Fig. 6 is an enlarged view of the abscissa in a section from t1 to t2 in Fig. 5.

As shown in Fig. 5, an output (heat flux) from the heat flux sensor is higher in responsiveness to increase and decrease in rotation speed than an output (temperature of the bearing) from the temperature sensor, and accuracy in detection of a sign of abnormality of the bearing may be improved. Timing of start of increase and decrease in output from the heat flux sensor is substantially synchronous with timing of start of increase and decrease in rotation speed.

<Bearing Abnormality Occurrence Simulation Test>

The present applicant conducted a bearing abnormality occurrence simulation test in an attempt to detect a sign on the occurrence of abnormality in a rolling bearing. In the present simulation test, by introducing a very small amount of lubricating oil into the rolling bearing only at the time of assembly of the main spindle, a situation where abnormality due to run-out of lubricating oil was likely to occur in a tested bearing was created. Such setting that a limiter was activated and the tester automatically stopped when a driving motor was overloaded due to abnormality in the tested bearing was made.

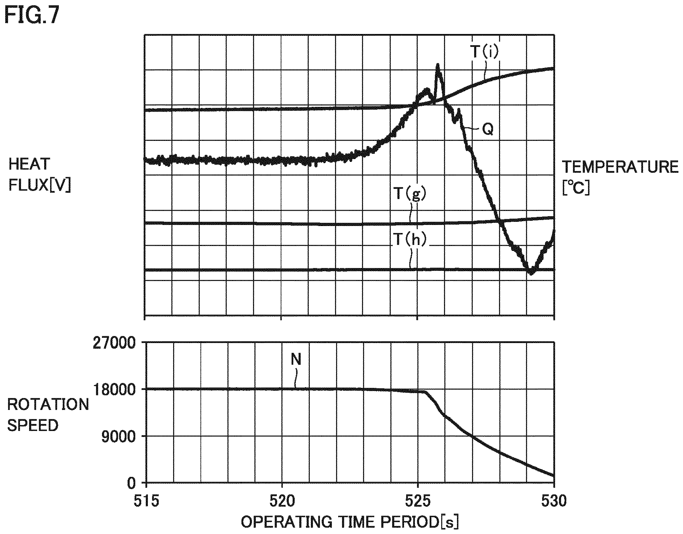

Fig. 7 is a diagram showing relation among a heat flux, a temperature, and a rotation speed in the test in which bearing abnormality due to run-out of lubricating oil was simulated. The abscissa represents an operating time period (seconds). The upper field shows a heat flux Q, an inner ring temperature T(i), an outer ring temperature T(g), and a housing temperature T(h), and the lower field shows a rotation speed N (the number of rotations per minute).

Based on relation between a heat capacity and heat radiation, relation of inner ring temperature T(i) > outer ring temperature T(g) > housing temperature T(h) is held.

Rotation speed N starts to lower after time 525 (seconds) at which overloading of the driving motor was detected. Before time 525 (seconds), each temperature hardly changed, and it can be seen that it is difficult to detect a sign of abnormality based on the temperature. It is expected based on a result of the test that increase in output value of heat flux Q is observed earlier than increase in inner ring temperature T(i) and the like and that heat flux Q is effective in early detection of the sign of occurrence of abnormality in the rolling bearing.

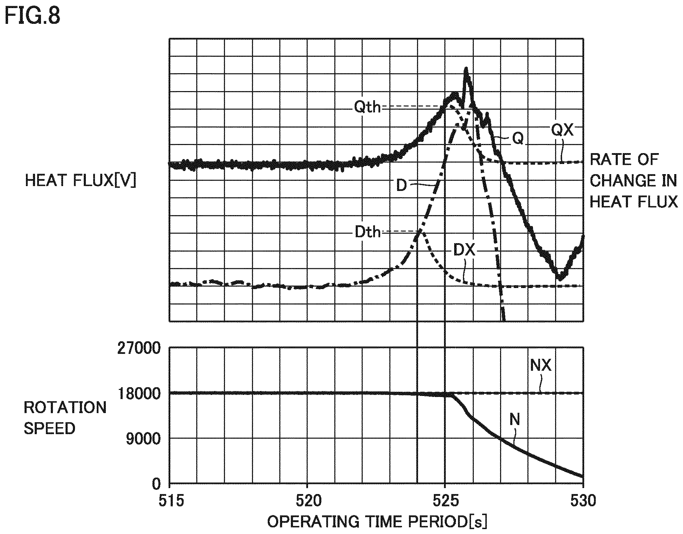

Fig. 8 is a waveform diagram for illustrating an operation by bearing apparatus 30 according to the present embodiment. Fig. 8 shows a waveform at the time of supply of cooling air as a result of operations by bearing apparatus 30 according to the present embodiment, as being superimposed on the waveform in a simulation experiment shown in Fig. 7.

The abscissa in Fig. 8 represents an operating time period (seconds). The upper field shows heat flux Q and a rate of change D in heat flux, and a heat flux Qx and a rate of change Dx at the time of supply of cooling air are shown as being superimposed thereon. The lower field shows rotation speed N (the number of rotations per minute).

Without supply of cooling air, after time 525 (seconds), overload of the motor due to damage to the bearing is detected and rotation speed N starts to lower.

In order to avoid damage to the bearing, supply of cooling air should be started before time 525 (seconds). Since the temperature increases after time 525 (seconds) as shown in Fig. 7, supply of cooling air based on increase in temperature is too late. In contrast, heat flux Q detected by the heat flux sensor increases from about time 523 (seconds). Therefore, supply of cooling air is preferably started in response to detection of increase in output from the heat flux sensor. A threshold value Qth on which determination as increase in output from the heat flux sensor is based should be set with a margin in consideration of noise in a steady state. With individual variation of a machine in which the bearing is set or operating conditions set by a user being various, however, it is very difficult to set threshold value Qth for slight increase.

In contrast, it was found in experiments conducted by the inventors that a sign of damage to the bearing could be found early by calculating rate of change D (an amount of change per unit time) in heat flux Q. It was also found about rate of change D that a relatively uniformly determined threshold value could practically be used even though individual variation in machine in which the bearing is set or the operating condition set by the user was different. Therefore, more preferably, supply of cooling air is started when rate of change D in output from the heat flux sensor exceeds a threshold value Dth. Start of supply of cooling air represents exemplary increase in flow rate of cooling air.

Rate of change D is a parameter calculated by time derivative of heat flux Q detected by the heat flux sensor. By using the parameter obtained by time derivative of heat flux Q, instantaneous and abrupt heat generation can accurately be detected.

By starting supply of cooling air at the time point (around 525 seconds) when heat flux Q exceeds threshold value Qth or at the time point (around 524 seconds) when rate of change D in heat flux exceeds threshold value Dth, the bearing is not damaged. Consequently, in the waveform in Fig. 8, a steady operation can continue as shown with a rotation speed Nx also after time 525 (seconds), without restriction being imposed on the motor.

In view of the results above, in bearing apparatus 30 according to the present embodiment, output signals from heat flux sensors 11a and 11b are used for regulation of the flow rate of cooling air emitted from nozzle 70. Specifically, when magnitude of heat flux Q or rate of change D in heat flux Q detected by heat flux sensors 11a and 11b exceeds a corresponding judgment criterion value (threshold value Qth or threshold value Dth), controller 55 determines that there is a sign of abnormality (such as seizure) of bearings 5a and 5b. Abnormality of bearings 5a and 5b can thus be detected early. Then, when controller 55 determines that there is a sign of abnormality of bearings 5a and 5b, it increases the flow rate of cooling air emitted from nozzle 70. Therefore, bearings 5a and 5b can be cooled with cooling air and seizure of bearings 5a and 5b can be prevented without control accompanying lowering in productivity of the machine tool (for example, stop of works by the machine tool, reduction in depth of cut, stop of rotation, reduction in speed of rotation). Prevention of damage to bearings 5a and 5b and longer life of bearings 5a and 5b are achieved.

When there is no sign of abnormality of bearings 5a and 5b, the flow rate of cooling air can be reduced without increasing an amount of cooling air Therefore, power consumption by compressor 51 can be reduced, and in addition, contribution also to reduction in size of compressor 51 can be achieved.

An amount of addition of air-oil may also be increased at the time point when heat flux Q exceeds threshold value Qth or at the time point when rate of change D in heat flux Q exceeds threshold value Dth. The oil valve for adjusting an amount of addition of air-oil, however, is often arranged at a location relatively distant from the bearing because oil is generally supplied to the bearing as being finely cut into fine particles after it is dripped, and there is a time lag from dripping of oil from the oil valve until spread of oil over the bearing. In contrast, the flow rate of cooling air can immediately be increased by increasing opening of air valve 52, and hence there is no time lag as in the case of air-oil. Therefore, bearing apparatus 30 can be cooled at appropriate timing and seizure of the bearing can appropriately be prevented.

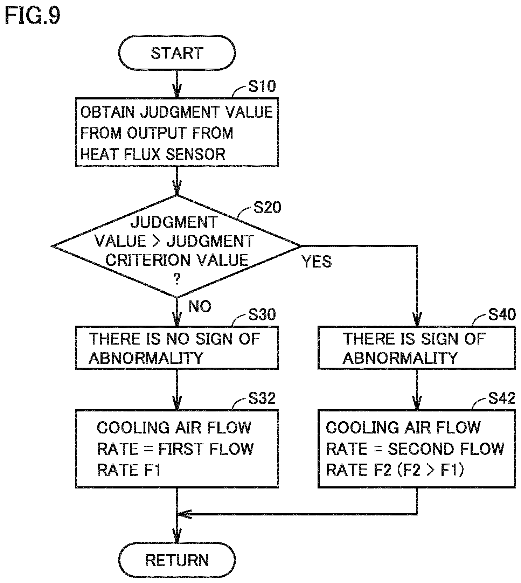

Fig. 9 is a flowchart for illustrating control of supply of cooling air by controller 55. Processing in this flowchart is performed as being invoked from a main routine each time a predetermined condition is satisfied (for example, every prescribed cycle).

Initially, controller 55 obtains a judgment value from heat flux sensors 11a and 11b (step S10). Though heat flux Q may be adopted as the judgment value, rate of change D in heat flux is preferred. When heat flux Q is adopted, for example, the judgment value can be obtained by checking a detection value from heat flux sensors 11a and 11b against a predetermined map stored in an internal memory of controller 55. When rate of change D in heat flux is adopted, for example, the judgment value can be obtained by dividing a difference between previous heat flux Q and present heat flux Q by a time interval.

Then, controller 55 determines whether or not the judgment value is larger than a judgment criterion value (step S20). This determination corresponds to processing for detecting a sign of abnormality of bearings 5a and 5b. In an example where heat flux Q is adopted as the judgment value, threshold value Qth shown in Fig. 8 is adopted as the judgment criterion value. In an example where rate of change D in heat flux is adopted as the judgment value, threshold value Dth shown in Fig. 8 is adopted as the judgment criterion value.

In view of variation in heat flux Q with rotation speed N, judgment criterion value Qth may be determined in advance for each rotation speed N, rotation speed N may be read from rotation sensor 58, and judgment criterion value Qth corresponding to read rotation speed N may be applied.

For example, judgment criterion value Dth may be determined in accordance with an expression (1) below, based on variation in heat flux from Q1 to Q2 during a period between time t1 and time t2 in Fig. 6:

$$Dth = M \times (Q2-Q1)/(t2-t1) \qquad \ldots (1)$$

where "M" represents a safety factor. Since safety factor M in the expression is different for each main spindle of the machine tool, M is set to various values such as M= 1 and M = 100.

Since it has been known that a value of rate of change D in heat flux at the time of occurrence of abnormality of the bearing is significantly larger than a value thereof at the time of increase in rotation speed N, uniform threshold value Dth can be used for rate of change D, regardless of variation in rotation speed N.

When the judgment value is not determined as being larger than the judgment criterion value (NO in step S20), controller 55 determines that there is no sign of abnormality of the bearing (step S30), and controls output from compressor 51 and opening of air valve 52 so as to set the flow rate of cooling air to a first flow rate F1 (step S32). First flow rate F1 may be set to zero, in which case, supply of cooling air is stopped. Thereafter, the process returns.

When the judgment value is determined as being larger than the judgment criterion value (YES in step S20), controller 55 determines that there is a sign of abnormality of the bearing (step S40), and controls output from the compressor and opening of the valve for air cooling so as to set the flow rate of cooling air to a second flow rate F2 higher than first flow rate F1 (step S42). The flow rate of cooling air is thus increased. Controller 55 continues increase in amount of cooling air for a prescribed period of time, and thereafter the process returns. When an amount of addition of air-oil is increased with increase in amount of cooling air, increase in amount of cooling air may be stopped at the time point of lapse of a time period required for spread of air-oil over the bearing.

As described above, bearing apparatus 30 according to the present embodiment includes bearings 5a and 5b including inner rings 5ia and Sib and outer rings 5ga and 5gb, spacer 6 including inner-ring spacer 6i adjacent to inner rings 5ia and Sib and outer-ring spacer 6g adjacent to outer rings 5ga and 5b, three nozzles 70 provided in outer-ring spacer 6g, each nozzle emitting cooling air toward inner-ring spacer 6i, and heat flux sensors 11a and 11b provided in inside surface 6gA of outer-ring spacer 6g. Outputs from heat flux sensors 11a and 11b are used for regulation of the flow rate of cooling air emitted from nozzle 70. Therefore, bearings 5a and 5b of bearing apparatus 30 can be cooled with cooling air at appropriate timing.

Furthermore, as shown in Fig. 3, heat flux sensors 11a and 11b are arranged between a position intermediate between first nozzle 70A and second nozzle 70B in the circumferential direction of inside surface 6gA of outer-ring spacer 6g and the position of second nozzle 70B. According to such arrangement, outputs from heat flux sensors 11a and 11b are less likely to be affected by cooling air and hence heat flux sensors 11a and 11b can more accurately detect a heat flux generated between outer-ring spacer 6g and inner-ring spacer 6i.

As shown in Fig. 2, nozzle 70 is arranged in the central portion of outer-ring spacer 6g in the axial direction, and heat flux sensors 11a and 1 1b are arranged at the respective ends of inside surface 6gA of outer-ring spacer 6g in the axial direction. According to such arrangement as well, outputs from heat flux sensors 11a and 11b are less likely to be affected by cooling air and hence heat flux sensors 11a and 11b can more accurately detect a heat flux generated between outer-ring spacer 6g and inner-ring spacer 6i.

[Modification of Lubrication Type]

Though an example of use of an air-oil lubricated bearing as bearings 5a and 5b is described in the embodiment above, a grease lubricated bearing may be employed as bearings 5a and 5b. When the grease lubricated bearing is employed as bearings 5a and 5b, lubricating oil supply paths 67a and 67b do not have to be provided.

[Modification of Arrangement of Heat Flux Sensor]

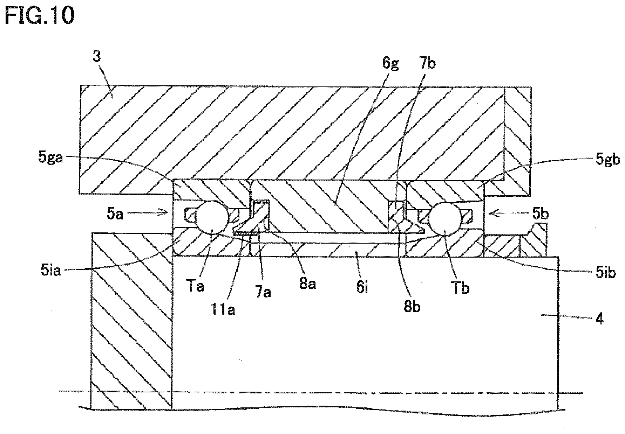

Fig. 10 is a diagram showing a modification of arrangement of the heat flux sensor. In the present modification, as shown in Fig. 10, protrusions 7a and 7b that protrude from respective axial side surfaces into a gap between the inner ring and the outer ring are added in outer-ring spacer 6g on a fixed side, and heat flux sensor 11a is provided in one protrusion 7a. In this case, though not shown, heat flux sensor 11b may similarly be arranged also in another protrusion 7b.

Heat originates from a portion where a bearing ring on the fixed side of a rolling bearing comes in contact with a rolling element. In an example where the heat flux sensor is provided in the bearing ring on the fixed side, high cost for working the bearing ring on the fixed side is a concern. This problem is solved by providing a heat flux sensor in protrusions 7a and 7b of the spacer on the fixed side, and the heat flux sensor can readily be provided. Since heat flux sensors 11a and 1 1b are provided in protrusions 7a and 7b that protrude into the gap between the inner ring and the outer ring, variation in temperature in the inside of the bearing during operations can directly be detected.

Protrusions 7a and 7b may also serve as nozzles that emit lubricating oil for air-oil lubrication to bearings 5a and 5b. In this case, the heat flux sensor can be provided by making use of an existing nozzle that emits lubricating oil. Therefore, for example, cost can be lower than in an example in which a dedicated component for providing a heat flux sensor is provided.

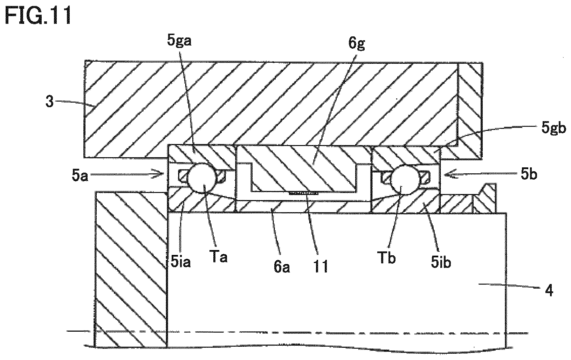

Fig. 11 is a diagram showing another modification of arrangement of the heat flux sensor. Figs. 1 and 2 show an example in which heat flux sensors 11a and 11b are provided at the end (in the vicinity of bearing 5) of the inside surface of outer-ring spacer 6g in the axial direction. As shown in Fig. 11, however, heat flux sensor 11 may be provided in the central portion of the inside surface of outer-ring spacer 6g in the axial direction.

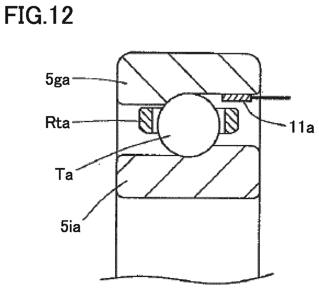

Fig. 12 is a diagram showing another modification of arrangement of the heat flux sensor. As shown in Fig. 12, heat flux sensor 11a may be provided on the inside surface of outer ring 5ga. In this case, though not shown, heat flux sensor 11b may similarly be provided on the inside surface of outer ring 5gb.

[Modification of Detection of Sign of Abnormality of Bearing]

An example in which a sign of abnormality of the bearing is detected based on magnitude of heat flux Q or rate of change D thereof (a time derivative value of heat flux Q) detected by heat flux sensors 11a and 11b is described in the embodiment above. A sign of abnormality of the bearing may be detected based on combination of heat flux Q detected by heat flux sensors 11a and 11b and another detection value.

For example, a sign of abnormality of the bearing may be detected based on a parameter such as correlation (followability) between heat flux Q and another detection value (rotation speed N, vibration, a temperature, a motor current value, preload, and external load) and a time integral value of heat flux Q. For example, whether or not there is a sign of abnormality of the bearing may be determined based on relation between rotation speed N and heat flux Q that follows the rotation speed.

Alternatively, relation between rotation speed N and heat flux Q may be monitored, and when relation therebetween becomes inconsistent, it may be determined that there is a sign of abnormality of the bearing. For example, when heat flux Q abruptly varies in spite of rotation speed N being constant and unchanged, it may be determined that there is a sign of abnormality of the bearing. Alternatively, for example, when heat flux Q does not follow rotation speed N while rotation speed N is varying, it may be determined that there is a sign of abnormality of the bearing.

Furthermore, abnormality diagnosis for detecting abnormality itself of the bearing in addition to detection of a sign of abnormality of the bearing may be made based on the parameter above. For example, when heat flux Q or rate of change D in heat flux exceeds a threshold value larger than Qth or Dth shown in Fig. 8, it may be determined that abnormality has occurred in the bearing. For example, when heat flux Q further increases also after increase in amount of cooling air as a result of detection of the sign of abnormality of the bearing, the bearing may have been damaged and hence the bearing may be determined as being abnormal.

When it is determined in abnormality diagnosis as above that abnormality has occurred in the bearing, the bearing apparatus may be controlled to stop rotation thereof. In this case, controller 55 may indicate abnormality by turning on a warning indicator.

It should be understood that the embodiment disclosed herein is illustrative and non-restrictive in every respect. The scope of the present invention is defined by the terms of the claims rather than the description of the embodiment above.

REFERENCE SIGNS LIST

1 spindle apparatus; 2 bearing jacket; 3 housing; 4 main spindle; 5, 5a, 5b bearing; 5ga, 5gb outer ring; 5ia, 5ib inner ring; 6 spacer; 6g outer-ring spacer; 6gA inside surface; 6i inner-ring spacer; 6iA outside surface; 7a, 7b protrusion; 11, 11a, 11b heat flux sensor; 30 bearing apparatus; 50 air supply apparatus; 51 compressor; 52 air valve; 53, 54 pipe; 55 controller; 56 temperature sensor; 57 vibration sensor; 58 rotation sensor; 67a, 67b lubricating oil supply path; 70 nozzle; 70A first nozzle; 70B second nozzle; 70C third nozzle; 71 emission port; 72 exhaust groove; 80 introduction groove; Rta, Rtb retainer; Ta, Tb rolling element

**Claims**

1.  A bearing apparatus (30) comprising:

    a bearing (5, 5a, 5b) including an inner ring (5ia, 5ib) and an outer ring (5ga, 5gb);
    a spacer (6) including an inner-ring spacer (6i) adjacent to the inner ring (5ia, 5ib) and an outer-ring spacer (6g) adjacent to the outer ring (5ga, 5gb);
    at least one nozzle (70, 70A, 70B, 70C) provided in the outer-ring spacer (6g), the at least one nozzle (70, 70A, 70B, 70C) emitting cooling air supplied from an air supply apparatus (50) toward the inner-ring spacer (6i); and **characterized in that**
    a heat flux sensor (11, 11a, 11b) is provided in the bearing (5, 5a, 5b) or the spacer (6), the heat flux sensor (11, 11a, 11b) measuring a heat flux, wherein
    an output signal from the heat flux sensor (11, 11a, 11b) is used for regulation of a flow rate of air emitted from the at least one nozzle (70, 70A, 70B, 70C).

2.  The bearing apparatus (30) according to claim 1, wherein

    the at least one nozzle (70, 70A, 70B, 70C) includes a first nozzle (70A) and a second nozzle (70B) arranged at a prescribed interval in a circumferential direction of an inside surface (6gA) of the outer-ring spacer (6g), and
    the heat flux sensor (11, 11a, 11b) is arranged at any position between a position intermediate between the first nozzle (70A) and the second nozzle (70B) and a position of the second nozzle (70B) in the circumferential direction of the inside surface (6gA) of the outer-ring spacer (6g).

3.  The bearing apparatus (30) according to claim 2, wherein

    the first nozzle (70A) and the second nozzle (70B) are provided as being inclined forward in a direction of rotation of the inner ring (5ia, 5ib), and
the second nozzle (70B) is arranged at a position on a forward side in the direction of rotation of the inner ring (5ia, 5ib) relative to the first nozzle (70A).

4. The bearing apparatus (30) according to any one of claims 1 to 3, wherein

the at least one nozzle (70, 70A, 70B, 70C) is arranged in a central portion of the outer-ring spacer (6g) in an axial direction, and
the heat flux sensor (11, 11a, 11b) is arranged at an end of the outer-ring spacer (6g) in the axial direction.

5. The bearing apparatus (30) according to any one of claims 1 to 4, wherein the flow rate of air emitted from the at least one nozzle (70, 70A, 70B, 70C) is increased when at least one of magnitude of a heat flux and a rate of change in heat flux detected by the heat flux sensor (11, 11a, 11b) exceeds a corresponding judgment criterion value.

6. The bearing apparatus (30) according to any one of claims 1 to 5, wherein

the air supply apparatus (50) includes

a compressor (51) that generates compressed air, and
a valve (52) provided between the compressor (51) and the at least one nozzle (70, 70A, 70B, 70C), and

an output from the heat flux sensor (11, 11a, 11b) is used for controlling at least one of output from the compressor (51) and opening of the valve (52).

7. The bearing apparatus (30) according to any one of claims 1 to 6, wherein

the heat flux sensor (11, 11a, 11b) is connected to a controller (55), and
the controller (55) determines whether there is abnormality of the bearing (5, 5a, 5b) or a sign of the abnormality based on an output from the heat flux sensor (11, 11a, 11b), and
when there is abnormality or a sign of the abnormality, the controller (55) performs processing for increasing the flow rate of air emitted from the at least one nozzle (70, 70A, 70B, 70C).

8. The bearing apparatus (30) according to claim 1, further comprising a load sensor (59) connected to a controller (55), the load sensor (59) detecting preload applied to the bearing (5, 5a, 5b) and external load, wherein
the controller (55) performs processing for regulating the flow rate of air emitted from the at least one nozzle (70, 70A, 70B, 70C) based on an output from the load sensor (59).

9. The bearing apparatus (30) according to any one of claims 1 to 8, rotatably supporting a main spindle (4) of a machine tool.

**Patentansprüche**

1. Lagervorrichtung (30), umfassend:

ein Lager (5, 5a, 5b), das einen Innenring (5ia, 5ib) und einen Außenring (5ga, 5gb) aufweist;
einen Abstandshalter (6), der einen Innenring-Abstandshalter (6i) neben dem Innenring (5ia, 5ib) und einen Außenring-Abstandshalter (6g) neben dem Außenring (5ga, 5gb) aufweist;
mindestens eine Düse (70, 70A, 70B, 70C), die in dem Außenring-Abstandshalter (6g) angeordnet ist, wobei die mindestens eine Düse (70, 70A, 70B, 70C) Kühlluft, die von einer Luftzufuhrvorrichtung (50) zugeführt wird, in Richtung des Innenring-Abstandshalters (6i) abgibt; und
**dadurch gekennzeichnet, dass**
ein Wärmeflusssensor (11, 11a, 11b) in dem Lager (5, 5a, 5b) oder dem Abstandshalter (6) angeordnet ist, wobei der Wärmeflusssensor (11, 11a, 11b) einen Wärmefluss misst, wobei ein Ausgangssignal von dem Wärmeflusssensor (11, 11a, 11b) zur Regulierung einer Strömungsrate von Luft verwendet wird, die aus der mindestens einen Düse (70, 70A, 70B, 70C) austritt.

2. Lagervorrichtung (30) nach Anspruch 1, wobei

die mindestens eine Düse (70, 70A, 70B, 70C) eine erste Düse (70A) und eine zweite Düse (70B) umfasst, die in einem vorgeschriebenen Intervall in einer Umfangsrichtung einer Innenfläche (6gA) des Außenring-Abstandshalters (6g) angeordnet sind, und
der Wärmeflusssensor (11, 11a, 11b) an einer beliebigen Position zwischen einer Position zwischen der ersten Düse (70A) und der zweiten Düse (70B) und einer Position der zweiten Düse (70B) in der Umfangsrichtung der Innenfläche (6gA) des Außenring-Abstandshalters (6g) angeordnet ist.

3. Lagervorrichtung (30) nach Anspruch 2, wobei

die erste Düse (70A) und die zweite Düse (70B) so angeordnet sind, dass sie in einer Drehrichtung des Innenrings (5ia, 5ib) nach vom geneigt sind, und

die zweite Düse (70B) an einer Position an einer Vorderseite in der Drehrichtung des Innenrings (5ia, 5ib) relativ zu der ersten Düse (70A) angeordnet ist.

**4.** Lagervorrichtung (30) nach einem der Ansprüche 1 bis 3, wobei

die mindestens eine Düse (70, 70A, 70B, 70C) in einem mittigen Abschnitt des Außenring-Abstandshalters (6g) in einer axialen Richtung angeordnet ist und

der Wärmeflusssensor (11, 11a, 11b) an einem Ende des Außenring-Abstandshalters (6g) in der axialen Richtung angeordnet ist.

**5.** Lagervorrichtung (30) nach einem der Ansprüche 1 bis 4, wobei

die Strömungsrate von Luft, die aus der mindestens einen Düse (70, 70A, 70B, 70C) austritt, erhöht wird, wenn mindestens eines von einer Größe eines Wärmeflusses und einer Änderungsrate des Wärmeflusses, die durch den Wärmeflusssensor (11, 11a, 11b) detektiert wird, einen entsprechenden Beurteilungskriteriumwert überschreitet.

**6.** Lagervorrichtung (30) nach einem der Ansprüche 1 bis 5, wobei

die Luftzufuhrvorrichtung (50) aufweist:

einen Kompressor (51), der Druckluft erzeugt, und

ein Ventil (52), das zwischen dem Kompressor (51) und der mindestens einen Düse (70, 70A, 70B, 70C) angeordnet ist, und

ein Ausgangssignal von dem Wärmeflusssensor (11, 11a, 11b) zum Steuern mindestens eines von einer Ausgabe von dem Kompressor (51) und einem Öffnen des Ventils (52) verwendet wird.

**7.** Lagervorrichtung (30) nach einem der Ansprüche 1 bis 6, wobei

der Wärmeflusssensor (11, 11a, 11b) mit einem Controller (55) verbunden ist und

der Controller (55) anhand eines Ausgangssignal von dem Wärmeflusssensor (11, 11a, 11b) bestimmt, ob eine Anomalie des Lagers (5, 5a, 5b) oder ein Anzeichen der Anomalie vorliegt, und,

wenn eine Anomalie oder ein Anzeichen der Anomalie vorliegt, der Controller (55) eine Verarbeitung zum Erhöhen der Strömungsrate von Luft durchführt, die aus der mindestens einen Düse (70, 70A, 70B, 70C) austritt.

**8.** Lagervorrichtung (30) nach Anspruch 1, des Weiteren umfassend einen Lastsensor (59), der mit einem Controller (55) verbunden ist, wobei der Lastsensor (59) eine auf das Lager (5, 5a, 5b) wirkende Vorlast und eine externe Last detektiert, wobei

der Controller (55) auf der Grundlage eines Ausgangssignals von dem Lastsensor (59) eine Verarbeitung zum Regulieren der Strömungsrate von Luft durchführt, die aus der mindestens einen Düse (70, 70A, 70B, 70C) austritt.

**9.** Lagervorrichtung (30) nach einem der Ansprüche 1 bis 8, die eine Hauptspindel (4) einer Werkzeugmaschine drehbar stützt.

**Revendications**

**1.** Appareil de palier (30) comprenant :

un palier (5, 5a, 5b) comportant une bague intérieure (5ia, 5ib) et une bague extérieure (5ga, 5gb) ;

une entretoise (6) comportant une entretoise de bague intérieure (6i) adjacente à la bague intérieure (5ia, 5ib) et une entretoise de bague extérieure (6g) adjacente à la bague extérieure (5ga, 5gb) ;

au moins une buse (70, 70A, 70B, 70C) prévue dans l'entretoise de bague extérieure (6g), l'au moins une buse (70, 70A, 70B, 70C) émettant de l'air de refroidissement fourni par un appareil d'alimentation en air (50) vers l'entretoise de bague intérieure (6i) ; et

**caractérisé en ce que**

un capteur de flux thermique (11, 11a, 11b) est prévu dans le palier (5, 5a, 5b) ou l'entretoise (6), le capteur de flux thermique (11, 11a, 11b) mesurant un flux thermique, dans lequel un signal de sortie du capteur de flux thermique (11, 11a, 11b) est utilisé pour réguler un débit d'air émis par l'au moins une buse (70, 70A, 70B, 70C).

**2.** Appareil de palier (30) selon la revendication 1, dans lequel

l'au moins une buse (70, 70A, 70B, 70C) comporte une première buse (70A) et une seconde buse (70B) agencées à un intervalle prescrit dans une direction circonférentielle d'une surface intérieure (6gA) de l'entretoise de bague extérieure (6g), et

le capteur de flux thermique (11, 11a, 11b) est placé à n'importe quelle position entre une position intermédiaire entre la première buse (70A) et la seconde buse (70B) et une position de la seconde buse (70B) dans la direction circonférentielle de la surface intérieure (6gA) de l'entretoise de bague extérieure (6g).

3. Appareil de palier (30) selon la revendication 2, dans lequel

la première buse (70A) et la seconde buse (70B) sont prévues pour être inclinées vers l'avant dans une direction de rotation de la bague intérieure (5ia, 5ib), et
la seconde buse (70B) est disposée dans une position située sur un côté avant dans la direction de rotation de la bague intérieure (5ia, 5ib) par rapport à la première buse (70A).

4. Appareil de palier (30) selon l'une quelconque des revendications 1 à 3, dans lequel

l'au moins une buse (70, 70A, 70B, 70C) est disposée dans une partie centrale de l'entretoise de bague extérieure (6g) dans une direction axiale, et
le capteur de flux thermique (11, 11a, 11b) est disposé à une extrémité de l'entretoise de bague extérieure (6g) dans la direction axiale.

5. Appareil de palier (30) selon l'une quelconque des revendications 1 à 4, dans lequel
le débit d'air émis par l'au moins une buse (70, 70A, 70B, 70C) est augmenté lorsqu'au moins l'un parmi la grandeur d'un flux de chaleur et un taux de variation du flux thermique détecté par le capteur de flux thermique (11, 11a, 11b) dépasse une valeur de critère d'évaluation correspondante.

6. Appareil de palier (30) selon l'une quelconque des revendications 1 à 5, dans lequel

l'appareil d'alimentation en air (50) comporte un compresseur (51) qui produit de l'air comprimé, et
une soupape (52) placée entre le compresseur (51) et l'au moins une buse (70, 70A, 70B, 70C), et
une sortie du capteur de flux thermique (11, 11a, 11b) est utilisée pour commander au moins l'une parmi la sortie du compresseur (51) et l'ouverture de la soupape (52).

7. Appareil de palier (30) selon l'une quelconque des revendications 1 à 6, dans lequel

le capteur de flux thermique (11, 11a, 11b) est relié à un contrôleur (55), et
le contrôleur (55) détermine s'il y a une anomalie du palier (5, 5a, 5b) ou un signe de l'anomalie sur la base d'une sortie du capteur de flux thermique (11, 11a, 11b), et

en cas d'anomalie ou de signe de l'anomalie, le contrôleur (55) effectue un traitement pour augmenter le débit d'air émis par l'au moins une buse (70, 70A, 70B, 70C).

8. Appareil de palier (30) selon la revendication 1, comprenant en outre un capteur de charge (59) relié à un contrôleur (55), le capteur de charge (59) détectant une précharge appliquée au palier (5, 5a, 5b) et une charge externe, dans lequel
le contrôleur (55) effectue un traitement pour réguler le débit d'air émis par l'au moins une buse (70, 70A, 70B, 70C) sur la base d'une sortie du capteur de charge (59).

9. Appareil de palier (30) selon l'une quelconque des revendications 1 à 8, supportant de manière rotative une broche principale (4) d'une machine-outil.

FIG.1

FIG.2

FIG.3

## FIG.4

FIG.5

FIG.6

FIG.7

FIG.8

## FIG.9

START

S10
OBTAIN JUDGMENT VALUE FROM OUTPUT FROM HEAT FLUX SENSOR

S20
JUDGMENT VALUE > JUDGMENT CRITERION VALUE ?

YES

NO

S30
THERE IS NO SIGN OF ABNORMALITY

S40
THERE IS SIGN OF ABNORMALITY

S32
COOLING AIR FLOW RATE = FIRST FLOW RATE F1

S42
COOLING AIR FLOW RATE = SECOND FLOW RATE F2 (F2 > F1)

RETURN

FIG.10

## FIG.11

FIG.12

5ga

Rta

Ta

5ia

11a

**REFERENCES CITED IN THE DESCRIPTION**

**Patent documents cited in the description**

- JP 2017026078 A

- JP 2018076923 A